# EUROPEAN PATENT SPECIFICATION

(11) **EP 0 645 560 B1**
(45) Date of publication and mention of the grant of the patent: **06.08.1997**
(21) Application number: 94115150.8
(22) Date of filing: 26.09.1994
(51) Int. Cl.: F16H 61/06

(54) **Controller of automatic transmission**
Steuerung für automatisches Getriebe
Dispositif de commande pour transmission automatique

(30) Priority: 29.09.1993 JP 243366/93
(43) Date of publication of application: 29.03.1995
(73) Proprietor: AISIN AW CO., LTD., Anjo-shi Aichi-ken 444-11 (JP)
(72) Inventor: Tsukamoto, Kazumasa, Anjo-shi, Aichi-ken (JP); Ando, Masahiko, Anjo-shi, Aichi-ken (JP); Hayabuchi, Masahoro, Anjo-shi, Aichi-ken (JP); Yamamoto, Yoshihisa, Anjo-shi, Aichi-ken (JP); Kano, Toshihiro, Anjo-shi, Aichi-ken (JP)
(74) Representative: VOSSIUS & PARTNER

(56) References cited:
- DE-A- 4 035 726
- DE-A- 4 042 045
- US-A- 4 532 829
- US-A- 5 094 130

## Description

The present invention relates to a controller of an automatic transmission.

Conventionally, P (parking ) range, R (reverse) range, N (neutral) range, D (drive) range, 2 (second) range and L (low) range are provided for an automatic transmission and a gear change step (gear ratio) is automatically selected and a gear change is made corresponding to a traveling condition of a vehicle as a driver selects a range by moving a shift lever to its range position in an I shaped pattern.

Beside that, one has been provided which is provided with an H pattern shift positions arranged in H shape similarly to a manual shift, in addition to the I pattern range positions, to allow to move a shift lever to a range position to select to travel in an automatic gear change mode and to move the shift lever to a shift position to select to travel in a manual gear change mode (See DE-A-4 042 045, which shows the features of the precharacterizing portion of Claim 1.). It allows a driver to freely select the gear change steps (gear ratios) and to obtain a sufficient shift feeling.

By the way, in the automatic transmission having only the I pattern range positions, a jumped gear change (e.g. 1-3 gear change, 1-4 gear change, etc.) is sometimes made depending on a traveling condition of the vehicle. Further, in the automatic transmission having the I pattern range positions and H pattern shift positions, a jumped gear change is sometimes made by manipulating the shift lever for example while driving the vehicle in the manual gear change mode.

In such cases, although it is ideal to make the gear change directly to a targeted gear change step (hereinafter referred to as "the targeted gear change step"), a thermal load of the frictional engage elements engaged during the gear change becomes great when the gear change is made directly to the targeted gear change step and hence the durability of the frictional engage elements is lowered.

While it is conceivable to increase a number of friction members of the frictional engage elements or to increase their frictional area, it increases not only the size and weight of the automatic transmission, but also a dragging loss due to the friction members. Then, the thermal load of the frictional engage elements is reduced by making a gear change once to a gear change step between the current gear change step and the targeted gear change step (hereinafter referred to as "the intermediate gear change step") when a jumped gear change is to be made.

A gear change to the targeted gear change step is made after firmly making the gear change to the intermediate gear change step by switching to a solenoid valve for the gear change to the targeted gear change step when a ratio of input number of revolutions and output number of revolutions reaches to a preset value in order to suppress a gear change shock from occurring (See Japanese Patent Laid-Open No. Hei 1-188750).

However, the frictional engage elements for making the gear change to the intermediate gear change step and the frictional engage elements for making the gear change to the targeted gear change step are engaged by supplying oil to the hydraulic servos and the hydraulic pressure is raised by adjusting by an accumulator, so that it takes a considerable time to raise the hydraulic pressure to the state in which the frictional engage elements can be engaged.

Accordingly, it not only prolongs a time for making the gear change (hereinafter referred to as "the gear change time"), but also gives a sense of incompatibility to the driver.

Accordingly, it is an object of the present invention to solve the aforementioned problems of the prior art controllers of the automatic transmission by providing a controller of an automatic transmission which allows to improve a durability of frictional engage elements and to shorten a gear change time even when a jumped gear change is made and gives no sense of incompatibility to a driver.

The object is solved by the characterising features of claim 1.

Accordingly, when a jumped gear change is to be made, because an operating pressure can be rapidly increased by supplying oil to the first hydraulic servo via the quick oil supplying circuit, a durability of the frictional engage elements may be improved, the gear change time may be shortened even when the jumped gear change is made and no sense of incompatibility is given to the driver.

Further, because the operating pressure can be quickly increased by supplying oil to the second hydraulic servo via the quick oil supplying circuit, the durability of the frictional engage elements may be improved, the gear change time may be shortened even when the jumped gear change is made via the intermediate gear change step and no sense of incompatibility is given to the driver.

Furthermore, because the operating pressure can be directly controlled by the pressure governing means, the operating pressure in the transient state may be accurately controlled.

The above and other advantages of the present invention will become more apparent in the following description and the accompanying drawings in which like numerals refer to like part.
Fig. 1 is a diagram showing a hydraulic circuit according to an embodiment of the present invention;
Fig. 2 is a schematic diagram of the automatic transmission of the present invention;
Fig. 3 is a table showing operations of the automatic transmission of the present invention;
Fig. 4 is a schematic diagram of a controller of the automatic transmission illustrating the embodiment of the present invention;
Fig. 5 is a block diagram of the controller of the automatic transmission showing the embodiment of the present invention;
Fig. 6 is a main flowchart showing an operation of quick control of the controller of the automatic transmission in the embodiment of the present invention;
Fig. 7 is a flowchart of a subroutine of a power on/off discriminating process in the embodiment of the present invention;
Fig. 8 is a first flowchart of a subroutine of a shift determining process in the embodiment of the present invention;
Fig. 9 is a second flowchart of the subroutine of the shift determining process in the embodiment of the present invention;
Fig. 10 is a graph showing a first example of a limitation map according to the embodiment of the present invention;
Fig. 11 is a graph showing a second example of the limitation map according to the embodiment of the present invention;
Fig. 12 is a flowchart of a subroutine of a targeted gear change step reading process in the embodiment of the present invention;
Fig. 13 is a drawing illustrating a manual switch in the embodiment of the present invention;
Fig. 14 is a table for discriminating shift positions according to the embodiment of the present invention;
Fig. 15 is a speed change map according to the embodiment of the present invention;
Fig. 16 is a flowchart of a subroutine of a pattern discriminating process in the embodiment of the present invention;
Fig. 17 is a flowchart of a subroutine of a valve switching process, operating pressure controlling process and gear change state discriminating process in the embodiment of the present invention;
Fig. 18 is a time chart when a jumped gear change is made in the embodiment of the present invention;
Fig. 19 is a time chart when a jumped gear change is made via an intermediate gear change step in the embodiment of the present invention;
Fig. 20 is a flowchart of a subroutine of the gear change state discriminating process in the embodiment of the present invention;
Fig. 21 is a graph showing a first example of a determination revolution map according to the embodiment of the present invention; and
Fig. 22 is a graph showing a second example of the determination revolution map according to the embodiment of the present invention.

Referring now to the drawings, a preferred embodiment of the present invention will be explained in detail.

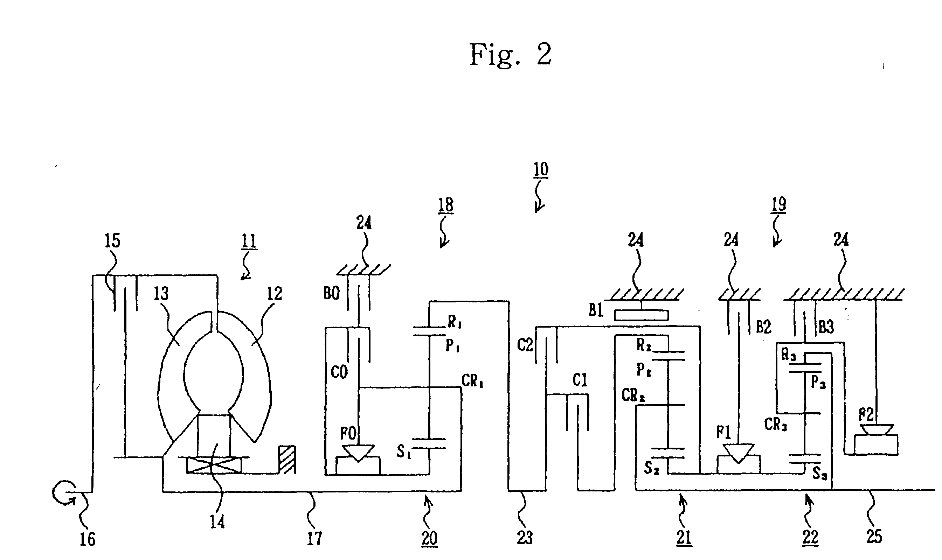

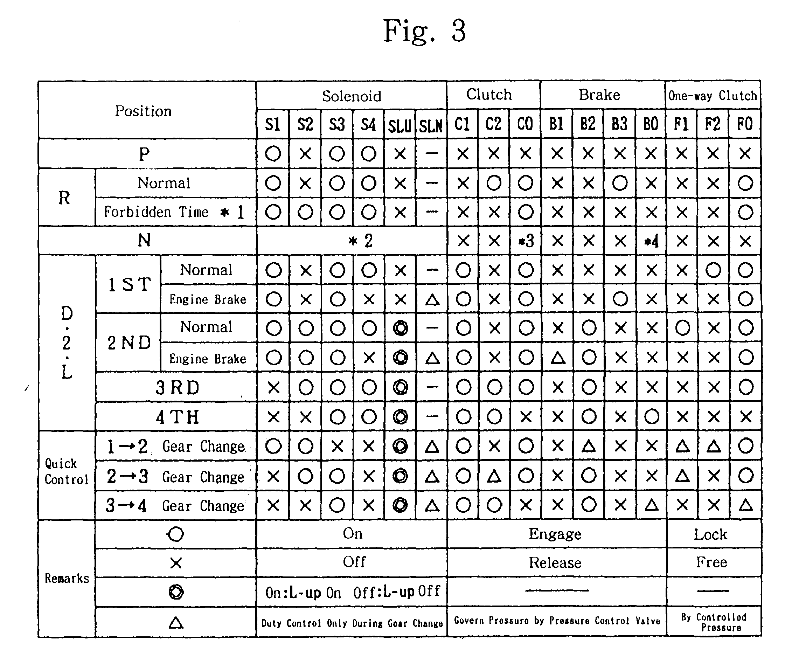

Fig. 2 is a schematic diagram of an automatic transmission according to the embodiment of the present invention and Fig. 3 is a table showing operations of the automatic transmission according to the embodiment of the present invention.

In Fig. 2, the automatic transmission comprises a transmission (T/M) 10 and a torque converter 11, wherein revolutions generated by an engine (not shown) are transmitted to the transmission 10. The transmission 10 changes their speed and transmits them to driving wheels (not shown).

The torque converter 11 comprises a pump impeller 12, turbine runner 13 and stator 14 as well as a lock-up clutch 15 for improving a power transmission efficiency and transmits revolutions of an input member 16 which is an output shaft of the engine to an input shaft 17 of the transmission 10 indirectly by a flow of oil within the torque converter 11 or directly by locking the lock-up clutch 15.

The transmission 10 comprises a sub-gear change unit 18 and main gear change unit 19. The sub-gear change unit 18 has an overdrive planetary gear unit 20 and the main gear change unit 19 has a front planetary gear unit 21 and rear planetary gear unit 22.

The overdrive planetary gear unit 20 comprises a carrier CR₁ connected to the input shaft 17 and supporting a pinion P₁, sun gear S₁ surrounding the input shaft 17 and ring gear R₁ linked to an input shaft 23 of the main gear change unit 19. The carrier CR₁ and the sun gear S₁ are linked through the intermediary of a third clutch C0 and third one-way clutch F0 and the sun gear S₁ and a case 24 are linked through the intermediary of a fourth brake B0.

On the other hand, the front planetary gear unit 21 comprises a carrier CR₂ connected to an output shaft 25 and supporting a pinion P₂, sun gear S₂ surrounding the output shaft 25 and is integrated with a sun gear S₃ of the rear planetary gear unit 22 and ring gear R₂ linked to the input shaft 23 through the intermediary of a first clutch C1. The input shaft 23 and the sun gear S₂ are linked through the intermediary of a second clutch C2 and the sun gear S₂ and the case 24 are linked through the intermediary of a first brake B1 composed of a band brake. The sun gear S₂ and the case 24 are further linked through the intermediary of a first one-way clutch F1 and second brake B2.

The rear planetary gear unit 22 comprises a carrier CR₃ supporting a pinion P₃, sun gear S₃ and ring gear R₃ integral with the input shaft 25. The carrier CR₃ and the case 24 are linked through the intermediary of a third brake B3 and second one-way clutch F2 provided in parallel.

Solenoid valves S1 through S4, linear solenoid valves SLU and SLN, first clutch C1, second clutch C2, third clutch C0, first brake B1, second brake B2, third brake B3, fourth brake B0, first one-way clutch F1, second one-way clutch F2 and third one-way clutch F0 in the aforementioned automatic transmission are controlled as shown in Fig. 3 in each gear change step of the P-range, R-range, D-range, 2-range and L-range, respectively. By the way, for item *1 in Fig. 3, a discrimination speed for prohibiting from driving in the R-range is set at 20 [km/h]. Further for item *2, each of the solenoid valves S1 through S4 in the N-range is controlled corresponding to a car speed and follows a solenoid pattern in the D-range. Further, for item *3, the third clutch C0 is engaged in the first to third speed and for item *4, the fourth brake B0 is engaged in the fourth speed.

During the first speed in the D-range, 2-range or L-range, the first clutch C1 and third clutch C0 are engaged and the second one-way clutch F2 and third one-way clutch F0 are put into a locked state. Therefore, in the overdrive planetary gear unit 20, a direct coupling state is created through the intermediary of the third clutch C0 and third one-way clutch F0 and the revolution of the input shaft 17 is transmitted to the main gear change unit 19 as it is. Further, in the main gear change unit 19, the revolution of the input shaft 23 is transmitted to the ring gear R₂ of the front planetary gear unit 21 through the intermediary of the first clutch C1, to the carrier CR₂ and to the output shaft 25 which is integral with the carrier CR₂. It then tries to give a torque to the carrier CR₃ of the rear planetary gear unit 22 through the intermediary of the sun gears S₂ and S₃, but the revolution of the carrier CR₃ is blocked by the lock of the second one-way clutch F2. Accordingly, the pinion P₃ autorotates and transmits the decelerated revolution to the ring gear R₃ which is integral with the output shaft 25.

During the second speed in the D-range, 2-range or L-range, the first clutch C1, third clutch C0 and second brake B2 are engaged and the first one-way clutch F1 and third one-way clutch F0 are put into a locked state. Therefore, in the overdrive planetary gear unit 20, the direct coupling state is maintained and the revolution of the input shaft 17 is transmitted to the input shaft 23 of the main gear change unit 19 as it is. In the main gear change unit 19, the revolution of the input shaft 23 is transmitted to the ring gear R₂ of the front planetary gear unit 21 through the intermediary of the first clutch C1. It then tries to give a torque to the sun gear S₂ through the intermediary of the pinion P₂, but it is blocked because the first one-way clutch F1 is put into the locked state along the engagement of the second brake B2. Accordingly, the carrier CR₂ rotates while autorotating the pinion P₂ and the revolution of the second speed is transmitted to the output shaft 25 only through the intermediary of the front planetary gear unit 21.

During the third speed in the D-range, 2-range or L-range, the first clutch C1, second clutch C2, third clutch C0 and second brake B2 are engaged and the third one-way clutch F1 is put into a locked state. Therefore, in the overdrive planetary gear unit 20, the direct coupling state is maintained and the revolution of the input shaft 17 is transmitted to the input shaft 23 of the main gear change unit 19 as it is. In the main gear change unit 19, the front planetary gear unit 21 is put into a direct coupling state as the first clutch C1 and second clutch C2 are engaged and the revolution of the input shaft 23 is transmitted to the output shaft 25 as it is.

During the fourth speed, i.e. the fastest speed step, in the D-range, 2-range or L-range, the first clutch C1, second clutch C2, second brake B2 and fourth brake B0 are engaged. In the main gear change unit 19, the third clutch C0 is released and the fourth brake B0 is engaged. Accordingly, the sun gear S₁ of the overdrive planetary gear unit 20 is locked by the engagement of the fourth brake B0, the carrier CR₁ rotates and transmits the revolution while autorotating the pinion P₁ and the revolution of the overdrive is transmitted to the input shaft 23 of the main gear change unit 19 which is in the direct coupling state.

Next, the controller of the automatic transmission will be explained.

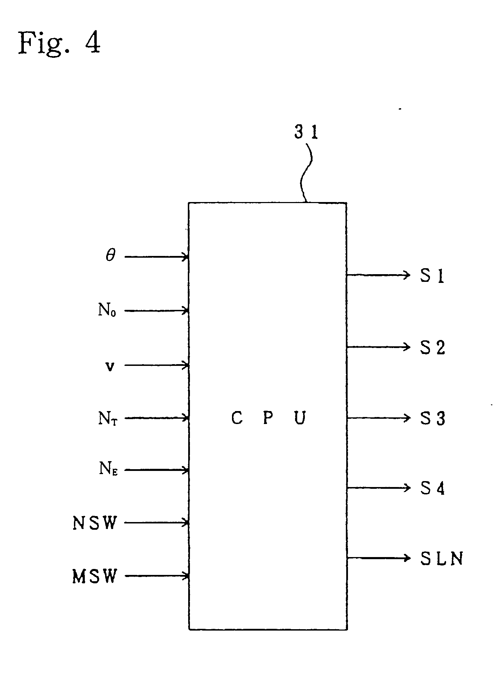

Fig. 4 is a schematic diagram of the controller of the automatic transmission showing the embodiment of the present invention.

In the figure, the reference numeral and character (31) denotes a CPU for controlling the whole controller of the automatic transmission to which a throttle opening theta, output number of revolutions N_{O}, car speed v, input number of revolutions N_{T}, engine speed N_{E} and others are input in a form of detection signal of each, (NSW) a neutral start switch signal, and (MSW) a manual switch signal.

On the other hand, the CPU 31 controls the solenoid valves S1 through S4 and linear solenoid valve SLN, etc. The solenoid valve S1 switches a 2-3 shift valve (not shown), solenoid valve S2 switches a 1-2 shift valve and 3-4 shift valve (not shown), solenoid valve S3 switches a B-1 timing valve (not shown) and solenoid valve S4 switches an engine brake control valve (not shown). The linear solenoid valve SLN governs a pressure control valve (not shown).

The CPU 31 discriminates a traveling pattern of the vehicle based on each detection signal, controls the linear solenoid valve SLN per each traveling pattern and controls a pressure of oil supplied to hydraulic servos (not shown) to engage the frictional engage elements (not shown) (hereinafter referred to as "the operating pressure").

Next, the CPU 31 will be explained.

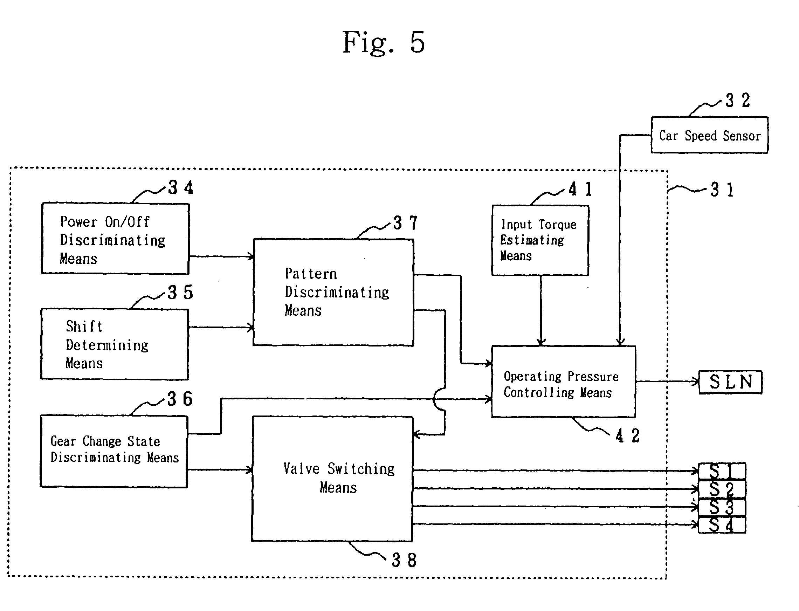

Fig. 5 is a block diagram of the controller of the automatic transmission showing the embodiment of the present invention.

In the figure, a car speed sensor 32 detects the car speed v, and power on/off discriminating means 34 discriminates whether the vehicle is in a power-on state. The power on/off discriminating means 34 discriminates whether an accel pedal (not shown) is being stepped on or not and determines that the vehicle is in the power-on state when the pedal is being stepped on and that the vehicle is power-off state when the pedal is not being stepped on.

Shift determining means 35 determines whether an up-shift gear change or down-shift gear change is to be made and whether a gear change to an intermediate gear change step is to be made or not in making the up-shift gear change, gear change state discriminating means 36 discriminates whether the gear change to the intermediate gear change step is about to be finished or not, pattern determining means 37 determines a gear change pattern of the vehicle based on the discrimination result obtained by the power on/off discriminating means 34 and the determination result obtained by the shift determining means 35, valve switching means 38 controls the solenoid valves S1 through S4 based on the discrimination result obtained by the gear change state discriminating means 36 and on the determination result made by the gear change state discriminating means 36, input torque estimating means 41 estimates an input torque and operating pressure control means 42 controls the linear solenoid valve SLN based on the discrimination result obtained by the gear change state discriminating means 36, the determination result obtained by the pattern determining means 37 and the estimation result obtained by the input torque estimating means 41.

Next, the operation of the controller of the automatic transmission constructed as described above will be explained.

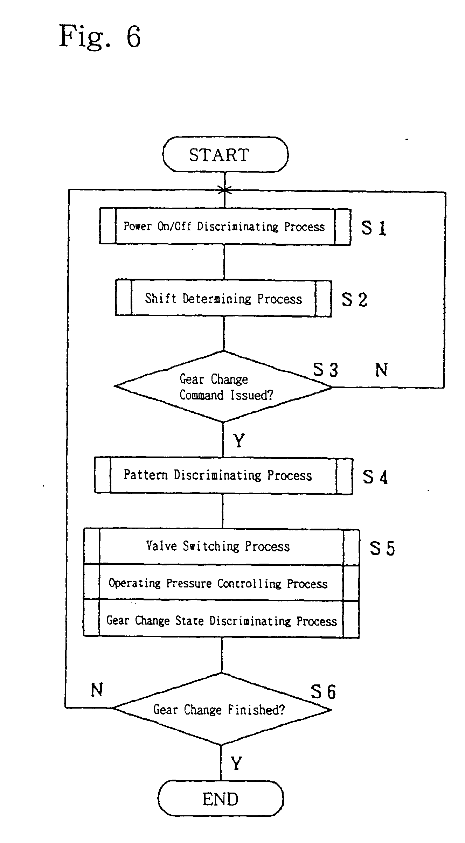

Fig. 6 is a main flowchart showing the quick control operation of the controller of the automatic transmission according to the embodiment of the present invention.
Step S1: Discriminate whether the vehicle is in the power on or off state by the power on/off discriminating means 34 (Fig. 5).
Step S2: The shift determining means 35 determines whether an up-shift gear change is to be made or down-shift gear change is to be made and when the up-shift gear change is to be made, whether a gear change to an intermediate gear change step is to be made or not.
Step S3: Discriminate whether a gear change command is being issued or not. When the gear change command is being issued, advances to Step S4 and when no gear change command is being issued, return to Step S1.
Step S4: The pattern determining means 37 determines the gear change pattern of the vehicle.
Step S5: The valve switching means 38 controls the solenoid valves S1 through S4, the operating pressure control means 44 controls the linear solenoid valve SLN and the gear change state discriminating means 36 determines whether the gear change to the intermediate gear change step is about to be finished or not.
Step S6: Discriminate whether the gear change has been finished or not. If the gear change has been finished, end the process and when the gear change has not been finished, return to Step S1.

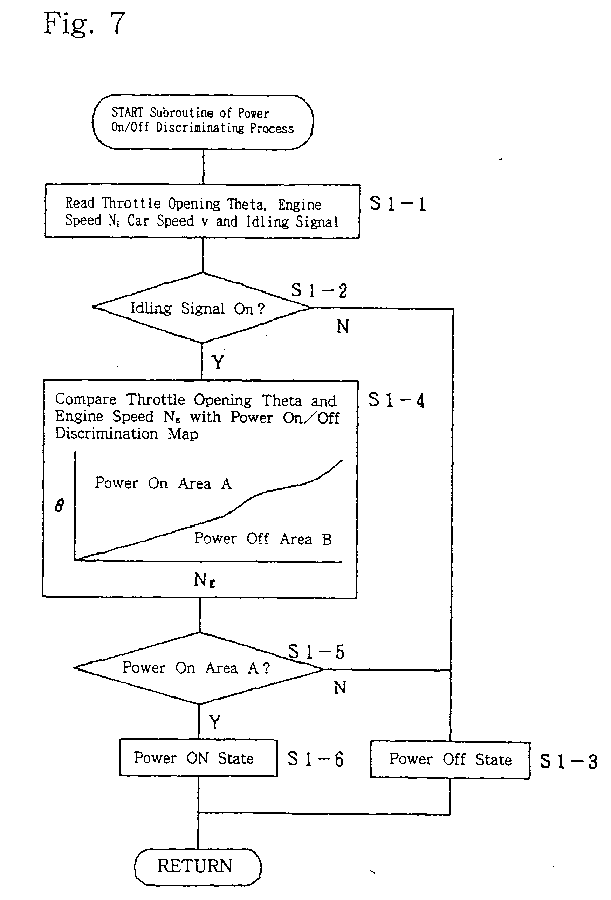

Next, a subroutine of the power on/off discriminating process made by the power on/off discriminating means 34 in Step S1 in Fig. 6 will be explained. Fig. 7 is a flowchart of the subroutine of the power on/off discriminating process in the embodiment of the present invention.
Step S1-1: Read a throttle opening theta, engine speed N_{E}, car speed v and idling signal.
Step S1-2: Discriminate whether the idling signal is on or not. When it is on, it is apparent that the accel pedal (not shown) is not being stepped on, so advance to Step S1-3 and when it is off, advance to Step S1-4.
Step S1-3: Determine that the vehicle is in the power off state.
Step S1-4: Compare the throttle opening theta and engine speed N_{E} with a power on/off discrimination map. In this case, the power on/off discrimination map has a power-on area A and power-off area B as shown in the figure and spotted points of the throttle opening theta and engine speed N_{E} belong to either of the areas.
Step S1-5: Discriminate whether the spotted points of the throttle opening theta and engine speed N_{E} belong to the power-on area A or not. When they belong to the power-on area A, advance to Step S1-6 and when they belong to the power-off area B, advance to Step S1-3.
Step S1-6: Determine that the vehicle is in the power on state.

Next, a subroutine of the shift determining process performed by the shift determining means 35 (Fig. 5) in Step 2 in Fig. 6 will be explained.

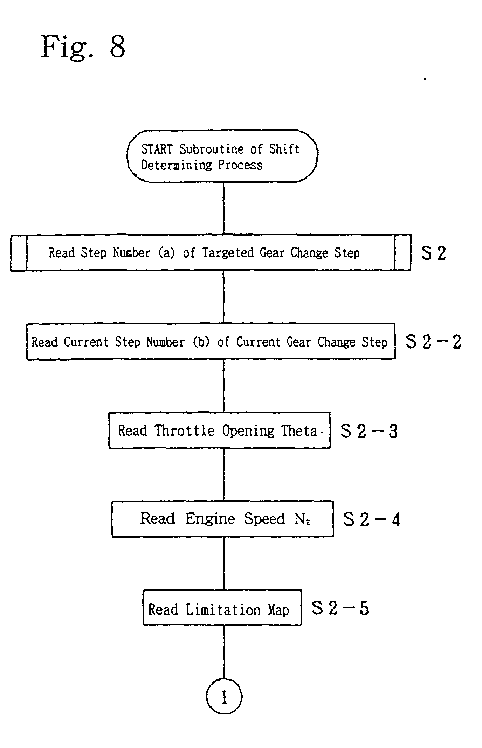

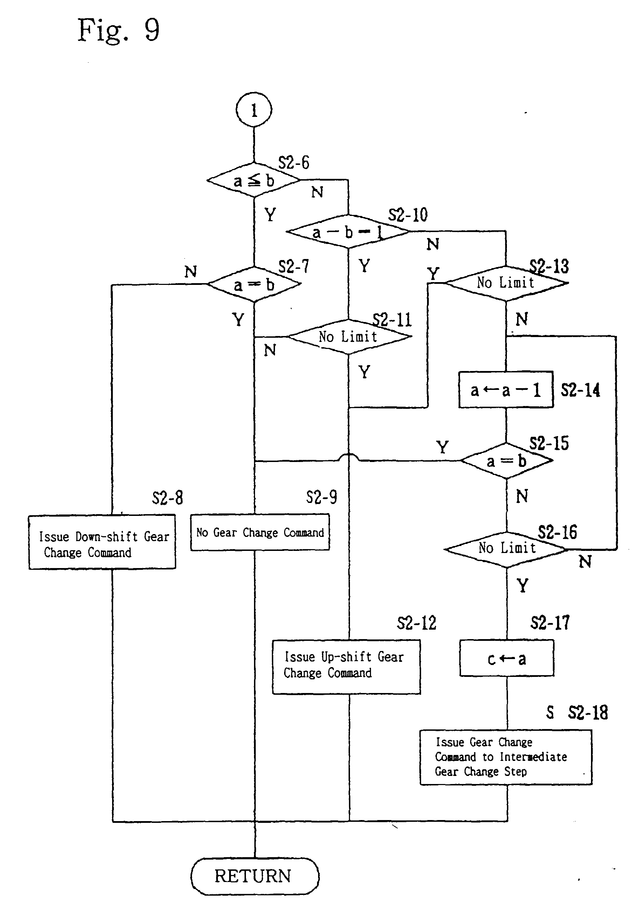

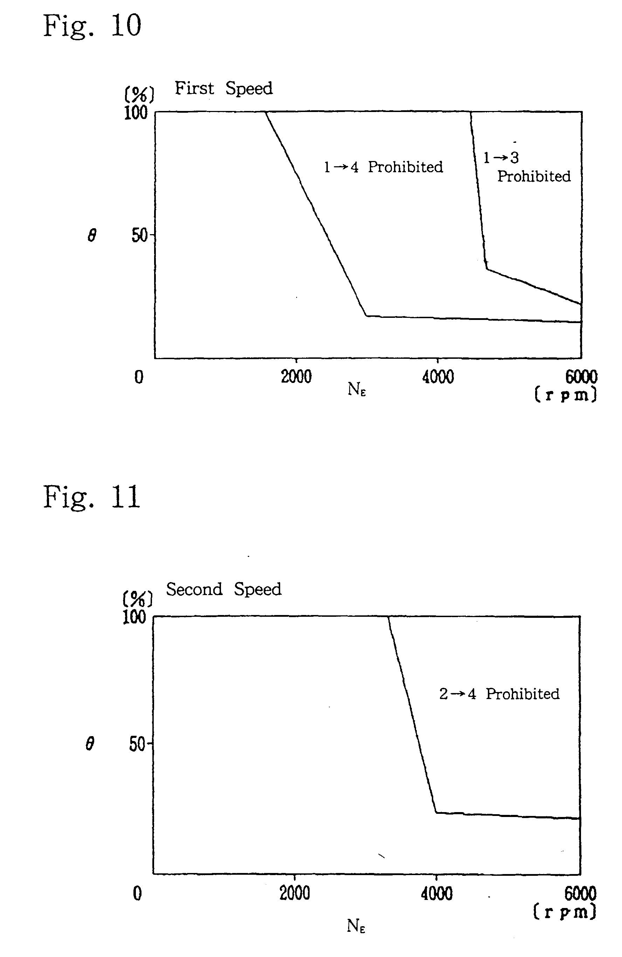

Fig. 8 is a first flowchart of the subroutine of the shift determining process in the embodiment of the present invention, Fig. 9 is a second flowchart of the subroutine of the shift determining process in the embodiment of the present invention, Fig. 10 is a graph showing a first example of a limitation map in the embodiment of the present invention and Fig. 11 is a graph showing a second example of the limitation map in the embodiment of the present invention.
Step S2-1: Read a step number (a) (a = 1, 2, 3, 4) of a targeted gear change step.
Step S2-2: Read a step number (b) (b = 1, 2, 3, 4) of a current gear change step.
Step S2-3: Read the throttle opening theta.
Step S2-4: Read the engine speed N_{E}.
Step S2-5: Read a limitation map such as those shown in Figs. 10 and 11 for limiting a direct gear change to the targeted gear change step. The limitation maps are provided for each gear change step and limited areas of various gear changes are set corresponding to the throttle opening theta and engine speed N_{E}. Fig. 10 shows a limitation map when a current gear change step is the first speed and Fig. 11 shows a limitation map when a current gear change step is the second speed.
Step S2-6: Discriminate whether the step number (a) of the targeted gear change step is less than the step number (b) of the current gear change step or not. If it is less than the step number (b), advance to Step S2-7 and if it is more than the step number b, advance to Step S2-10.
Step S2-7: Discriminate whether the step number (a) of the targeted gear change step is equal to the step number (b) of the current gear change step or not. If they are not equal, advance to Step S2-8 and if they are equal, advance to Step S2-9.
Step S2-8: Issue a down-shift gear change command.
Step S2-9: No gear change command is issued.
Step S2-10: Discriminate whether a value obtained by subtracting the step number (a) of the targeted gear change step by the step number (b) of the current gear change step is 1 or not. If the value is 1, advance to Step S2-11 and if it is not 1, advance to Step S2-13.
Step S2-11: Discriminate whether the gear change to the targeted gear change step is limited or not by the limitation map read in Step S2-5. If it is limited, advance to Step S2-12 and it is not limited, advance to Step S2-9.
Step S2-12: Issue an up-shift gear change command.
Step S2-13: Discriminate whether the jumped gear change to the targeted gear change step is limited or not by the limitation map. If it is not limited, advance to Step S2-12 and if it is limited, advance to Step S2-14.
Step S2-14: Set a value obtained by subtracting 1 from the step number (a) of the targeted gear change step as a new step number (a) of the targeted gear change step.
Step S2-15: Discriminate whether the new step number (a) of the targeted gear change step is equal to the step number (b) of the current gear change step or not. If they are equal, advance to Step S2-9 and if they are not equal, advance to Step S2-16.
Step S2-16: Discriminate whether the new targeted gear change step is limited or not by the limitation map. If it is not limited, advance to Step S2-17 and if it is limited, return to Step S2-14.
Step S2-17: Set the new step number (a) of the targeted gear change step as a step number (c) of the intermediate gear change step.
Step S2-18: Issue a gear change command to the intermediate gear change step.

Next, a subroutine of the targeted gear change step reading process in Step S2-1 in Fig. 8 will be explained.

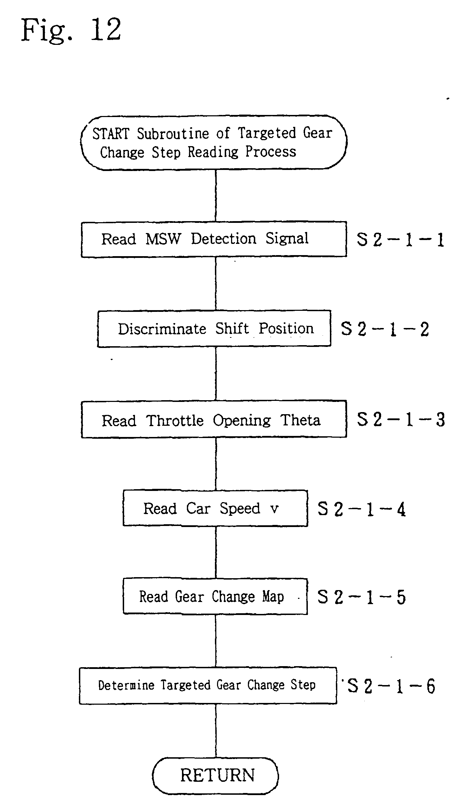

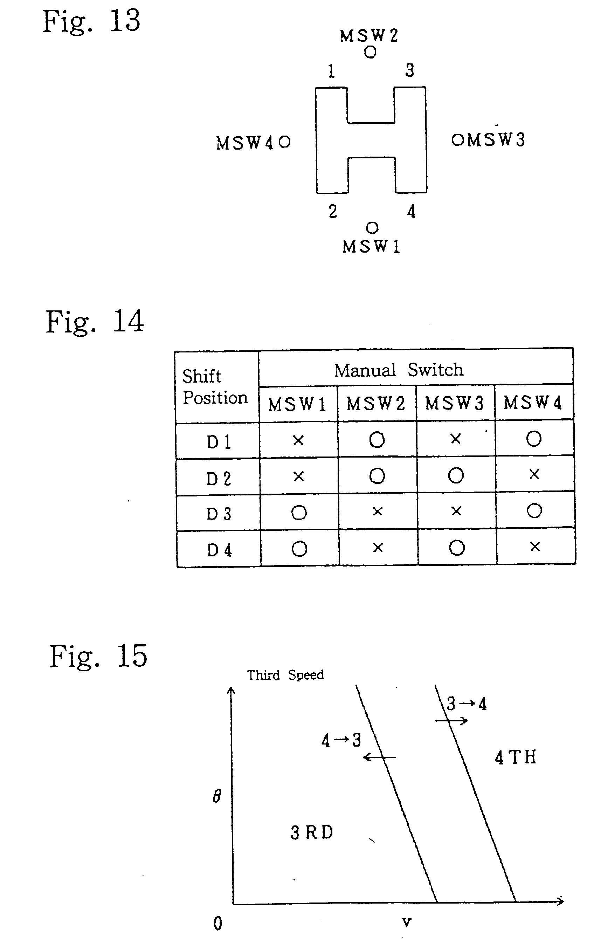

Fig. 12 is a flowchart of the subroutine of the targeted gear change step reading process in the embodiment of the present invention, Fig. 13 is a drawing illustrating a manual switch in the embodiment of the present invention, Fig. 14 is a table for discriminating shift positions in the embodiment of the present invention and Fig. 15 is a gear change map according to the embodiment of the present invention.
Step S2-1-1: Read detection signals of the manual switches MSW1 through MSW4. As shown in Fig. 13, the manual switch MSW1 is turned on when a shift lever (not shown) is moved rearward (lower side in the figure), the manual switch MSW2 is turned on when the shift lever is moved forward (upper side in the figure), the manual switch MSW3 is turned on when the shift lever is moved to the right (right side in the figure) and the manual switch MSW4 is turned on when the shift lever is moved to the left (left side in the figure).

By the way, although the shift lever is used as shift manipulating means in the present embodiment, push button switches may be used instead of the shift lever.
Step S2-1-2: Discriminate a shift position by the discrimination table in Fig. 14 based on the detection signals of the manual switches MSW 1 through 4.

In Fig. 14, D1 through D4 indicate respective shift positions, marks (O) indicate that the respective manual switches MSW 1 through 4 are ON and marks (X) indicate that the respective manual switches MSW 1 through 4 are OFF.
Step S2-1-3: Read the throttle opening theta.
Step S2-1-4: Read the car speed v.
Step S2-1-5: Read the gear change map created corresponding to respective shift positions D1 through D4. By the way, Fig. 15 is a gear change map of the shift position D3.
Step S2-1-6: Determine a targeted gear change step corresponding to the car speed v and throttle opening theta based on the gear change map.

Next, a subroutine of the pattern discriminating process in Step S4 in Fig. 6 will be explained.

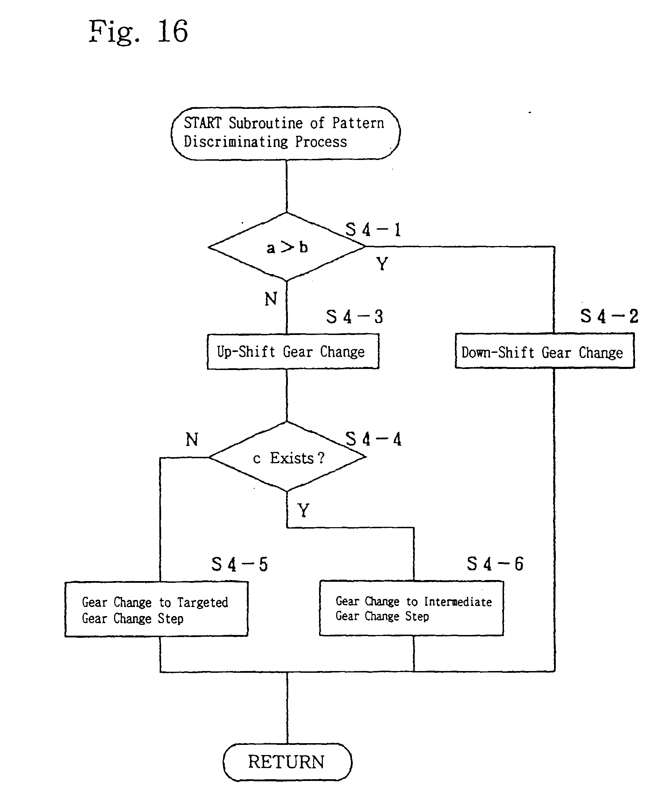

Fig. 16 is a flowchart of the subroutine of the pattern discriminating process according to the embodiment of the present invention.
Step S4-1: Discriminate whether the step number (a) of the targeted gear change step is greater than the step number (b) of the current gear change step or not. If it is greater than the later, advance to Step S4-2 and if it is less than that, advance to Step S4-3.
Step S4-2: Determine the gear change pattern of the vehicle as the down-shift gear change.
Step S4-3: Determine the gear change pattern of the vehicle as the up-shift gear change.
Step S4-4: Discriminate whether there exists the step number (c) of the intermediate gear change step or not. If there exists no step number (c), advance to Step S4-5 and there exists the step number (c), advance to Step S4-6.
Step S4-5: Determine the gear change pattern of the vehicle as the gear change to the targeted gear change step.
Step S4-6: Determine the gear change pattern of the vehicle as the gear change to the intermediate gear change step.

Thus the discrimination is made whether the gear change pattern of the vehicle is the down-shift gear change or up-shift gear change and when it is the up-shift gear change, whether it is the gear change to the targeted gear change step or the gear change to the intermediate gear change step.

By the way, while the frictional engage elements for making the gear change to the intermediate gear change step and for making the gear change to the targeted gear change step are engaged by supplying oil to their hydraulic servos, it not only prolongs the gear change time, but also gives a sense of incompatibility to the driver if it takes a time to raise the operating pressure.

Then the operating pressure of each hydraulic servo of the first brake B1 (Fig. 2), second brake B2, third brake B3, fourth brake B0 and second clutch C2 is raised quickly so that the durability of the frictional engage elements may be improved, the gear change time be shortened even when a jumped gear change is made and no sense of incompatibility is given to the driver.

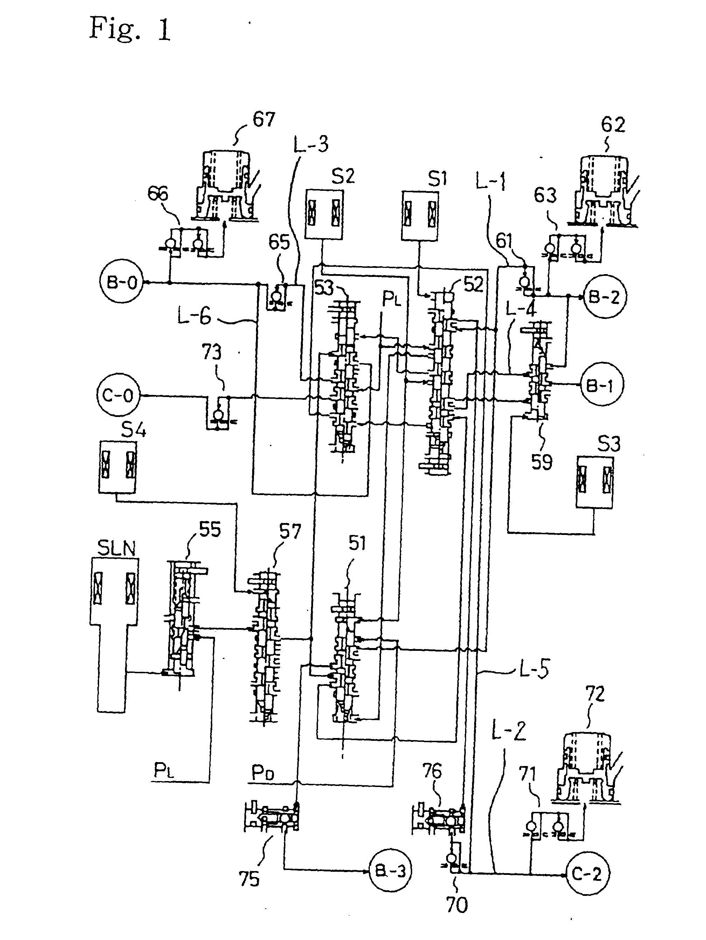

Fig. 1 is a diagram illustrating a hydraulic circuit according to the embodiment of the present invention.

In the figure, the reference numeral and character (P_{L}) denotes a line pressure, (P_{D}) a D-range pressure, (51) a 1-2 shift valve for making a 1-2 gear change, (52) a 2-3 shift valve for making a 2-3 gear change, (53) a 3-4 shift valve for making a 3-4 gear change, (55) a pressure control valve, (57) an engine brake control valve and (59) a B-1 timing valve.

Further, the reference numeral (B-1) denotes a hydraulic servo of the first brake B1 (Fig. 2), (B-2) a hydraulic servo of the second brake B2, (B-3) a hydraulic servo of the third brake B3, (B-0) a hydraulic servo of the fourth brake B0, (C-2) a hydraulic servo of the second clutch C2 and (C-0) a hydraulic servo of the third clutch C0.

The hydraulic servo B-2 is supplied with oil via an orifice valve 61 which operates as oil amount limiting means and an operating pressure of the hydraulic servo B-2 is governed by an accumulator 62 connected via an orifice valve 63. The hydraulic servo B-0 is supplied with oil via an orifice valve 65, oil amount limiting means, and an operating pressure of the hydraulic servo B-0 is governed by an accumulator 67 connected via an orifice valve 66. The hydraulic servo C-2 is supplied with oil via an orifice valve 70, oil amount limiting means, and an operating pressure of the hydraulic servo C-2 is governed by an accumulator 72 connected via an orifice valve 71.

By the way, an orifice valve 73 is connected to the hydraulic servo C-0, a check valve 75 is connected to the hydraulic servo B-3 and a check valve 76 is connected to the orifice valve 70.

A solenoid valve S1 switches the 2-3 shift valve 52, a solenoid valve S2 switches the 1-2 shift valve 51 and 3-4 shift valve 53, a solenoid valve S3 switches the B-1 timing valve 59, a solenoid valve S4 switches the engine brake control valve 57 and the linear solenoid valve SLN governs the pressure of the pressure control valve 55.

In the hydraulic circuit constructed as described above, each solenoid of the solenoid valves S1 through S4 becomes ON when the 1-2 gear change is made. At this time, the 1-2 shift valve 51, 2-3 shift valve 52, 3-4 shift valve 53 and engine brake control valve 57 come to the left half position of the drawing (hereinafter referred to as "the left half position") and the B-1 timing valve 59 comes to the right half position of the drawing (hereinafter referred to as the "right half position").

As a result, oil under the D-range pressure P_{D} is supplied to the orifice valve 61 via the 1-2 shift valve 51 and its pressure is governed by the orifice valve 61 to be supplied to the hydraulic servo B-2. At this time, the operating pressure of the hydraulic servo B-2 is governed by the accumulator 62 to which oil is supplied via the orifice valve 63. By the way, the hydraulic servo C-0 has been supplied with oil from the time of the first speed.

Thus the hydraulic servo B-2 can be supplied with oil by the limited oil supplying circuit created via the orifice valve 61 and a oil path L-1.

When the 1-2 gear change is made quickly, each solenoid of the solenoid valves S1 and S2 turns on and each solenoid of the solenoid valves S3 and S4 turns off. At this time, the 1-2 shift valve 51, 2-3 shift valve 52, 3-4 shift valve 53 and B-1 timing valve 59 come to the left half position and the engine brake control valve 57 comes to the right half position. Further, the pressure of the line pressure P_{L} can be governed by the pressure control valve 55 by operating the the linear solenoid valve SLN.

Accordingly, oil under the pressure (hereinafter referred to as "the controlled pressure") is supplied to the hydraulic servo B-2 via the engine brake control valve 57, 1-2 shift valve 51, 2-3 shift valve 52 and B-1 timing valve 59.

Next, when the 2-3 gear change is made, the solenoid of the solenoid valve S1 turns off and each solenoid of the solenoid valves S2 through S4 turns on. At this time, the 1-2 shift valve 51, 3-4 shift valve 53 and engine brake control valve 57 come to the left half position and the 2-3 shift valve 52 and B-1 timing valve 59 come to the right half position.

As a result, oil under the D-range pressure P_{D} is supplied to the orifice valve 70 via the 1-2 shift valve 51, 2-3 shift valve 52 and check valve 76 and after its pressure is governed by the orifice valve 70, it is supplied to the hydraulic servo C-2. At this time, the operating pressure of the hydraulic servo C-2 is controlled by the accumulator 72 to which oil is supplied via the orifice valve 71. By the way, the hydraulic servo C-0 and hydraulic servo B-2 have been supplied with oil from the time of the second speed.

Thus the hydraulic servo C-2 can be supplied with oil by the limited oil supplying circuit created via the orifice valve 70.

When the 2-3 gear change is made quickly, each solenoid of the solenoid valves S1 and S4 turns off and each solenoid of the solenoid valves S2 and S3 turns on. At this time, the 1-2 shift valve 51 and 3-4 shift valve 53 come to the left half position and the 2-3 shift valve 52, engine brake control valve 57 and B-1 timing valve 59 come to the right half position. Further, the pressure of the line pressure P_{L} can be governed by the pressure control valve 55 by operating the linear solenoid valve SLN.

Accordingly oil under the controlled pressure is supplied to the hydraulic servo C-2 via the engine brake control valve 57, 1-2 shift valve 51, 2-3 shift valve 52 and 3-4 shift valve 53.

Next, when the 3-4 gear change is made, each solenoid of the solenoid valves S1 and S2 turns off and each solenoid of the solenoid valves S3 and S4 turns on. At this time, the 1-2 shift valve 51 and engine brake control valve 57 come to the left half position and the 2-3 shift valve 52, 3-4 shift valve 53 and B-1 timing valve 59 come to the right half position.

As a result, oil under the D range pressure P_{D} is supplied via the 3-4 shift valve 53 to the orifice valve 65, by which its pressure is governed, and then to the hydraulic servo B-0. At this time, the operating pressure of the hydraulic servo B-0 is controlled by the accumulator 67 to which oil is supplied via the orifice valve 66. By the way, the hydraulic servo C-2 and hydraulic servo B-2 have been supplied with oil from the time of the third speed.

Thus the hydraulic servo B-2 can be supplied with oil by the limited oil supplying circuit created via the orifice valve 65 and passing through an oil path L-3.

When the 3-4 gear change is made quickly, each solenoid of the solenoid valves S1, S2 and S4 turns off and the solenoid of the solenoid valve S3 turns on. At this time, the 1-2 shift valve 51 comes to the left half position and the 2-3 shift valve 52, 3-4 shift valve 53, engine brake control valve 57 and B-1 timing valve 59 come to the right half position. Further, the pressure of the line pressure P_{L} can be governed by the pressure control valve 55 by operating the the linear solenoid valve SLN.

Accordingly, oil under the controlled pressure is supplied to the hydraulic servo B-0 via the engine brake control valve 57 and 3-4 shift valve 53.

As described above, oil can be supplied to each of the hydraulic servos B-2, B-0 and C-2 not only by the limited oil supplying circuit created going through the orifice valves 61, 65 and 70 but also by the quick oil supplying circuit created without going through the orifice valves 61, 65 and 70 when the 1-2, 2-3 and 3-4 gear changes are made. Accordingly, it allows to increase the operating pressure of each of the hydraulic servos B-2, B-0 and C-2, to quickly engage the second brake B2, fourth brake B0 and second clutch C2 and thereby to shorten the gear change time. Further, because the operating pressure can be generated directly by the linear solenoid valve SLN, the operating pressure in the transient state may be accurately controlled.

On the other hand, because the limited oil supplying circuit is provided, oil under the line pressure P_{L} can be supplied to a predetermined hydraulic servo even when a failure is made, thereby allowing to maintain the control of the gear change.

Next, a case when a jumped gear change is made will be explained.

When a jumped gear change is to be made in the present embodiment, oil is supplied to each of the hydraulic servos B-2, B-0 and C-2 as the first hydraulic servo via the quick oil supplying circuit to make a gear change to a targeted gear change step and oil is supplied to each of the hydraulic servos B-2, B-0 and C-2 as the second hydraulic servo via the limited oil supplying circuit to make a gear change to an intermediate gear change step. At this time, although the quick oil supplying circuit and limited oil supplying circuit for making the gear change to the targeted gear change step are communicated, oil of the limited oil supplying circuit will not enter the quick oil supplying circuit because a hydraulic pressure within the quick oil supplying circuit is generally higher than that of the limited oil supplying circuit.

Because the gear change to the targeted gear change step may be thus made independently from the gear change to the intermediate gear change step, the gear change time to the targeted gear change step may be shortened and the operating pressure in the transient state may be accurately controlled.

By the way, when the direct gear change to the targeted gear change step is limited, oil is supplied to each of the hydraulic servos B-2, B-0 and C-2 via the quick oil supplying circuit to make the gear change to the intermediate gear change step and the gear change is switched to that to the targeted gear change step immediately before the gear change to the intermediate gear change step ends. Then oil is supplied via the limited oil supplying circuit to each of the hydraulic servos B-2, B-0 and C-2 to which oil has been supplied until immediately before the gear change to the intermediate gear change step has ended and oil is supplied via the quick oil supplying circuit to each of the hydraulic servos B-2, B-0 and C-2 for making the gear change to the targeted gear change step.

Thus, even when the gear change going through the intermediate gear change step is made, a continuity is maintained between the gear change to the intermediate gear change step and the gear change to the targeted gear change step, so that the gear change shock can be suppressed from occurring and the gear change time can be shortened.

The discrimination that the gear change to the intermediate gear change step is about to be finished or not is made by finding a difference of numbers of revolutions delta N; delta N = N_{T} - N_{O} ∗ I_{C}(where N_{T} is an input number of revolutions, N_{O} is an output number of revolutions and I_{C} is a gear ratio after the gear change to the intermediate gear change step) and by discriminating whether the difference of numbers of revolutions delta N has become greater than a discrimination number of revolutions N_{NEXT}. The discrimination number of revolutions N_{NEXT} is set per each intermediate gear change step with the throttle opening theta as a parameter.

Next, a subroutine of the valve switching process, operating pressure controlling process and gear change state discriminating process in Step S5 in Fig. 6 will be explained.

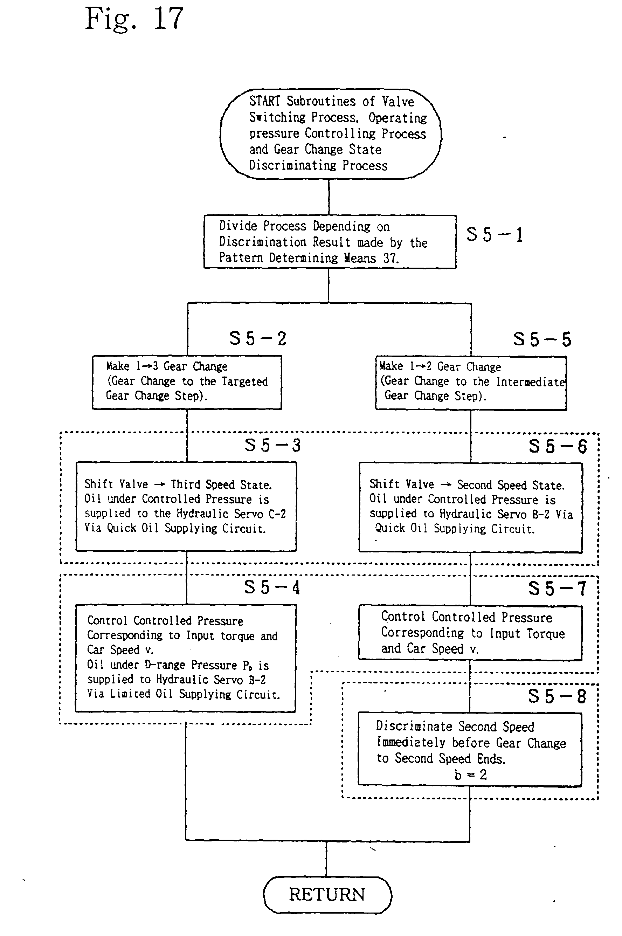

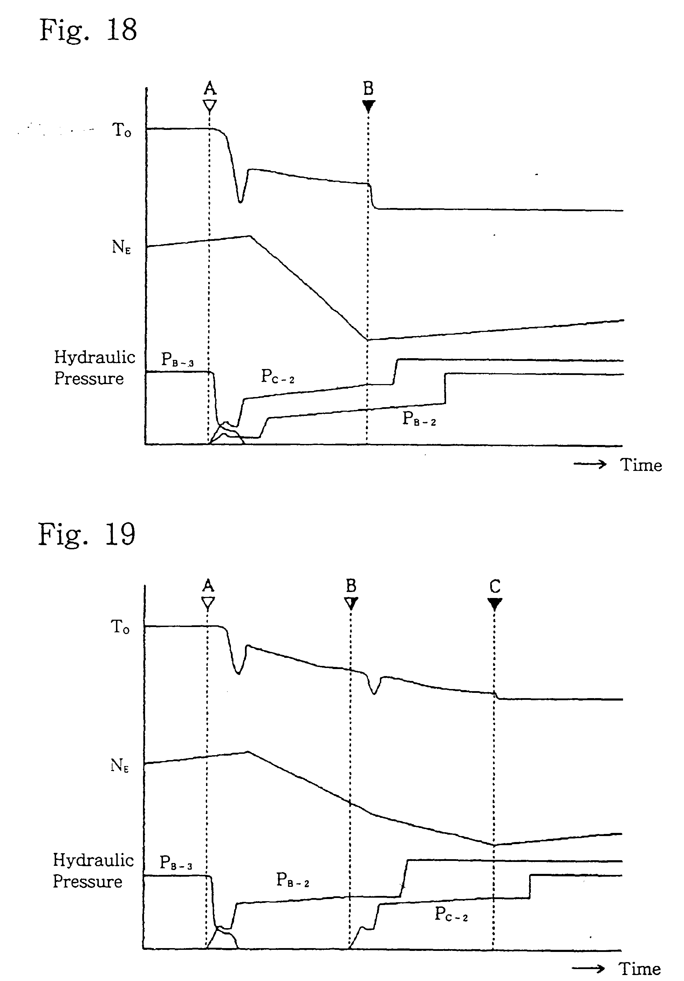

Fig. 17 is a flowchart of the subroutine of the valve switching process, operating pressure controlling process and gear change state discriminating process in the embodiment of the present invention, Fig. 18 is a time chart when a jumped gear change is made in the embodiment of the present invention and Fig. 19 is a time chart when a jumped gear change is made via an intermediate gear change step in the embodiment of the present invention.

Here the 1->3 gear change will be explained as an example of the jumped gear change. In Figs. 18 and 19, the reference characters (T_{O}) denotes an output shaft torque, (N_{E}) an engine speed, (P_{B-3}) an operating pressure of the hydraulic servo B-3 (Fig. 1), (P_{C-2}) an operating pressure of the hydraulic servo C-2 and (P_{B-2}) an operating pressure of the hydraulic servo B-2.
Step S5-1: Divide the process into two depending on the discrimination result made by the pattern determining means 37. If the gear change pattern of the vehicle is determined to be the gear change to the targeted gear change step in Step S4-5 in Fig. 16, advance to Step S5-2 and if the gear change pattern of the vehicle is determined to be the gear change to the intermediate gear change step, advance to Step S5-5.
Step S5-2: Perform the 1->3 gear change (gear change to the targeted gear change step).
Step S5-3: The valve switching means 38 (Fig. 5) puts the 1-2 shift valve 51, 2-3 shift valve 52 and 3-4 shift valve 53 into the third speed state at point of time A in Fig. 18. Then oil under the controlled pressure generated by the pressure control valve 55 is supplied to the hydraulic servo C-2 via the quick oil supplying circuit by the engine brake control valve 57.
Step S5-4: The operating pressure control means 42 controls the controlled pressure corresponding to the input torque and car speed v. During this time, oil under the D-range pressure P_{D} is supplied to the hydraulic servo B-2 via the limited oil supplying circuit as shown in Fig. 18 and oil in the hydraulic servo B-3 is rapidly drained. At point B in Fig. 18, a determination is made that a change of number of revolutions has finished and after that, oil is supplied to the hydraulic servo C-2 and hydraulic servo B-2 via the limited oil supplying circuit.
Step S5-5: Perform the 1->2 gear change (gear change to the intermediate gear change step).
Step S5-6: The valve switching means 38 puts the 1-2 shift valve 51, 2-3 shift valve 52 and 3-4 shift valve 53 into the second speed state at point A in Fig. 19. Oil under the controlled pressure generated by the pressure control valve 55 is supplied to the hydraulic servo B-2 via the quick oil supplying circuit by the B-1 timing valve 59.
Step S5-7: The operating pressure control means 42 controls the controlled pressure corresponding to the input torque and car speed v.
Step S5-8: The gear change state discriminating means 36 makes a discrimination of the second speed at point B immediately before the end of the gear change to the second speed. A step number (b) of the current gear change step is set as 2. Then the processes in Step S5-1 through S5-4 are performed and a discrimination whether the change of number of revolutions has finished or not at point C in Fig. 19. After that, oil is supplied to the hydraulic servo C-2 and hydraulic servo B-2 via the limited oil supplying circuit.

Next, a subroutine of the gear change state discriminating process in Step S5 in Fig. 6 will be explained.

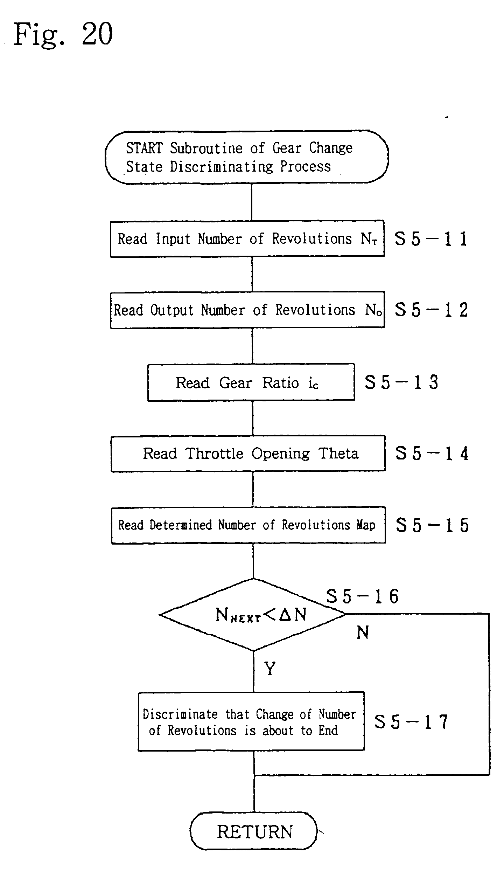

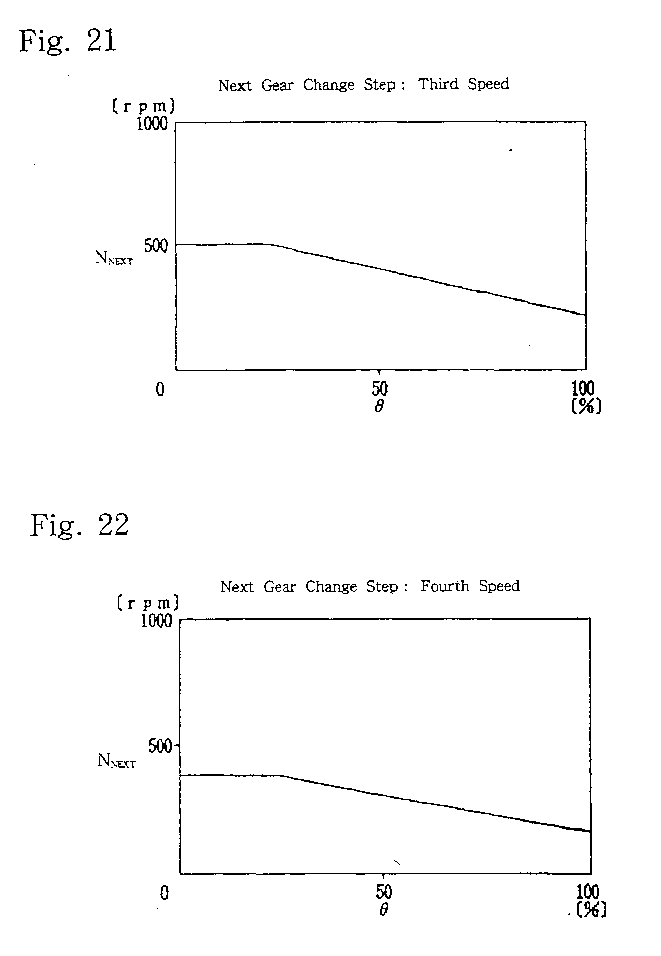

Fig. 20 is a flowchart of the subroutine of the gear change state discriminating process in the embodiment of the present invention, Fig. 21 is a graph showing a first example of a determination revolution map according to the embodiment of the present invention and Fig. 22 is a graph showing a second example of the determination revolution map according to the embodiment of the present invention.
Step S5-11: Read the input number of revolutions N_{T}.
Step S5-12: Read the output number of revolutions N_{O}.
Step S5-13: Read the gear ratio i_{C} after the gear change to the intermediate gear change step.
Step S5-14: Read the throttle opening theta.
Step S5-15: Read the determination revolution map created corresponding to the intermediate gear change step using the throttle opening theta as a parameter. Fig. 21 shows a determination revolution map in the third speed and Fig. 22 shows a determination revolution map in the fourth speed.
Step S5-16: Discriminate whether the determination number of revolutions N_{NEXT} is smaller than the difference of number of revolutions delta N or not. If the determination number of revolutions N_{NEXT} is smaller than the difference of number of revolutions delta N, advance to Step S5-17 and when the determination number of revolutions N_{NEXT} is greater than the difference of number of revolutions delta N, the process is returned.
Step S5-17: The discrimination is made whether the change of number of revolutions has finished or not.

## Claims

1. A controller of an automatic transmission, comprising:
a first hydraulic servo to which oil is supplied to make a targeted gear ratio when making a jumped gear change from a current gear ratio; and
a second hydraulic servo to which oil is supplied to make an intermediate gear ratio when making said gear change from the current gear ratio;
characterized by:
a limited oil supplying circuit (L - 1,L - 2,L - 3) supplying oil through an orifice valve (61, 65, 70);
a quick oil supplying circuit (L- 4,L-5,L-6) supplying oil without passing it through said orifice valve (61,65,70);
pressure governing means (55,SLN) for governing a line pressure as a controlled pressure to supply oil under said controlled pressure to said quick oil supplying circuit (L-4,L-5,L-6); and
oil path switching means (51,52,53,57,S1,S2,S4) for switching between said limited oil supplying circuit (L-1,L-2,L-3) and said quick oil supplying circuit (L-4,L-5,L-6) to supply oil to said first hydraulic servo or second hydraulic servo when making said jumped gear change to said targeted gear ratio or making said gear change to said intermediate gear ratio.

2. The controller according to Claim 1 comprising pattern discriminating means (37) for discriminating a gear change pattern corresponding to a travelling condition of a vehicle,
said oil path switching means (51,52,53,57,S1,S2,S4) switching said limited oil supplying circuit (L-1,L-2,L-3) and said quick oil supplying circuit (L-4,L-5,L-6) corresponding to the gear change pattern discriminated by said pattern discriminating means (37).

3. The controller according to Claim 2,
wherein said pattern discriminating means (37) discriminates whether to make said jumped gear change to said targeted gear ratio or make said gear change to said intermediate gear ratio.

4. The controller according to Claim 3,
wherein if said pattern discriminating means (37) discriminates to make said jumped gear change to said targeted gear ratio, said oil path switching means (51,52,53,57,S1,S2,S4) switches to supply said controlled pressure through said quick oil supplying circuit (L-4,L-5,L-6) to said first hydraulic servo.

5. The controller according to Claim 3,
wherein if said pattern discriminating means (37) discriminates to make said gear change to said intermediate gear ratio, said oil path switching means (51,52,53,57,S1,S2,S4) switches to supply said controlled pressure through said quick oil supplying circuit (L-4,L-5,L-6) to said second hydraulic servo.

6. The controller according to Claim 5 further comprising:
a gear change state discriminating means (36) for discriminating whether or not said gear change to said intermediate gear ratio is about to be completed,
wherein if said gear change state discriminating means (36) discriminates that said gear change to said intermediate gear ratio is about to be completed, said oil path switching means (51,52,53,57,S1,S2,S4) switches to supply said controlled pressure through said quick oil supplying circuit (L-4,L-5,L-6) to said first hydraulic servo.

7. The controller according to Claim 6,
wherein said gear change state discriminating means (36) discriminates that said gear change to said intermediate gear ratio is about to be completed, if the difference (ΔN) between a input rotary speed (N_{T}) and a rotary speed (N_{C}*I_{C}), which is calculated by product an output rotary speed (N_{O}) by said intermediate gear ratio (I_{C}), becomes greater than a predetermined rotary speed (N_{NEXT}).

8. The controller according to any of claim 1 to 7,
wherein said pressure governing means comprises a pressure control valve (55) for controlling said controlled pressure, and a linear solenoid valve (SLN) connected to said pressure control valve.

9. The controller according to any of claim 1 to 8,
wherein said oil path switching means comprises shift valve (51,52,53) for switching to make said jumped gear change to said targeted gear ratio or to make said gear change to said intermediate gear ratio, and solenoid valve (S1,S2) connected to said shift valve (51,52,53).

10. The controller according to any of claim 1 to 8,
wherein said oil path switching means comprises a switching valve (57) for supplying or cutting said controlled pressure to said quick supply oil circuit (L-1,L-2,L-3), and a solenoid valve (S4) connected to said switching valve (57).

## Patentansprüche

1. Steuerung eines Automatikgetriebes mit:
einem ersten hydraulischen Stellglied, dem Öl zugeführt wird, um eine Zielübersetzung herzustellen, wenn ein sprunghaftes Schalten aus einer aktuellen Übersetzung erfolgt; und
einem zweiten hydraulischen Stellglied, dem Öl zugeführt wird, um eine Zwischenübersetzung herzustellen, wenn das Schalten aus der aktuellen Übersetzung erfolgt;
gekennzeichnet durch:
einen begrenzten Ölzufuhrkreis (L-1, L-2, L-3), der Öl durch ein Drosselventil (61, 65, 70) zuführt;
einen schnellen Ölzufuhrkreis (L-4, L-5, L-6), der Öl zuführt, ohne es durch das Drosselventil (61, 65, 70) zu führen;
eine Druckregeleinrichtung (55, SLN) zum Regeln eines Arbeitsdrucks als gesteuerten Druck, um Öl unter dem gesteuerten Druck zu dem schnellen Ölzufuhrkreis (L-4, L-5, L-6) zu führen; und
eine Ölweg-Umschalteinrichtung (51, 52, 53, 57, S1, S2, S4) zum Umschalten zwischen dem begrenzten ölzufuhrkreis (L-1, L-2, L-3) und dem schnellen ölzufuhrkreis (L-4, L-5, L-6), um Öl zu dem ersten hydraulischen Stellglied oder zweiten hydraulischen Stellglied zu führen, wenn das sprunghafte Schalten auf die Zielübersetzung erfolgt oder das Schalten auf die Zwischenübersetzung erfolgt.

2. Steuerung nach Anspruch 1 mit einer Programmunterscheidungseinrichtung (37) zum Unterscheiden eines Schaltprogramms entsprechend einem Fahrzustand eines Fahrzeugs,
wobei die Ölweg-Umschalteinrichtung (51, 52, 53, 57, S1, S2, S4) den begrenzten Ölzufuhrkreis (L-1, L-2, L-3) und den schnellen Ölzufuhrkreis (L-4, L-5, L-6) entsprechend dem durch die Programmunterscheidungseinrichtung (37) unterschiedenen Schaltprogramm umschaltet.

3. Steuerung nach Anspruch 2,
wobei die Programmunterscheidungseinrichtung (37) unterscheidet, ob das sprunghafte Schalten auf die Zielübersetzung erfolgen soll oder ob das Schalten auf die Zwischenübersetzung erfolgen soll.

4. Steuerung nach Anspruch 3,
wobei bei Unterscheidung durch die Programmunterscheidungseinrichtung (37), daß das sprunghafte Schalten auf die Zielübersetzung erfolgt, die Ölweg-Umschalteinrichtung (51, 52, 53, 57, S1, S2, S4) umschaltet, um den gesteuerten Druck über den schnellen Ölzufuhrkreis (L-4, L-5, L-6) zu dem ersten hydraulischen Stellglied zu führen.

5. Steuerung nach Anspruch 3,
wobei bei Unterscheidung durch die Programmunterscheidungseinrichtung (37), daß das Schalten auf die Zwischenübersetzung erfolgt, die Ölweg-Umschalteinrichtung (51, 52, 53, 57, S1, S2, S4) umschaltet, um den gesteuerten Druck über den schnellen Ölzufuhrkreis (L-4, L-5, L-6) zu dem zweiten hydraulischen Stellglied zu führen.

6. Steuerung nach Anspruch 5, ferner mit:
einer Schaltzustand-Unterscheidungseinrichtung (36) zum Unterscheiden, ob das Schalten auf die Zwischenübersetzung in Kürze abgeschlossen wird,
wobei bei Unterscheidung durch die Schaltzustand-Unterscheidungseinrichtung (36), daß das Schalten auf die Zwischenübersetzung in Kürze abgeschlossen wird, die Ölweg-Umschalteinrichtung (51, 52, 53, 57, S1, S2, S4) umschaltet, um den gesteuerten Druck über den schnellen Ölzufuhrkreis (L-4, L-5, L-6) zu dem ersten hydraulischen Stellglied zu führen.

7. Steuerung nach Anspruch 6,
wobei die Schaltzustand-Unterscheidungseinrichtung (36) unterscheidet, daß das Schalten auf die Zwischenübersetzung in Kürze abgeschlossen wird, wenn die Differenz (ΔN) zwischen einer Eingangsdrehzahl (N_{T}) und einer Drehzahl (N_{O}*I_{C}), die als Produkt einer Ausgangsdrehzahl (N_{O}) und der Zwischenübersetzung (I_{C}) berechnet wird, größer als eine vorbestimmte Drehzahl (N_{NEXT}) wird.

8. Steuerung nach einem der Ansprüche 1 bis 7,
wobei die Druckregeleinrichtung aufweist: ein Drucksteuerventil (55) zum Steuern des gesteuerten Drucks und ein Linearmagnetventil (SLN), das mit dem Drucksteuerventil verbunden ist.

9. Steuerung nach einem der Ansprüche 1 bis 8,
wobei die Ölweg-Umschalteinrichtung aufweist: Schaltventile (51, 52, 53) zum Umschalten, um das sprunghafte Schalten auf die Zielübersetzung durchzuführen oder um das Schalten auf die Zwischenübersetzung durchzuführen, und Magnetventile (S1, S2), die mit den Schaltventilen (51, 52, 53) verbunden sind.

10. Steuerung nach einem der Ansprüche 1 bis 8,
wobei die Ölweg-Umschalteinrichtung aufweist: ein Umschaltventil (57) zum Zuführen oder Trennen des gesteuerten Öldrucks zu oder von dem schnellen Ölzufuhrkreis (L-1, L-2, L-3) und ein Magnetventil (S4), das mit dem Umschaltventil (57) verbunden ist.

## Revendications

1. Dispositif de commande pour une transmission automatique, comprenant:
un premier servomécanisme hydraulique auquel de l'huile est fournie pour établir un rapport d'engrenage voulu quand on effectue un changement de rapport par saut à partir d'un rapport d'engrenage en cours; et
un deuxième servomécanisme hydraulique auquel de l'huile est fournie pour établir un rapport d'engrenage intermédiaire quand on effectue ledit changement de rapport à partir du rapport d'engrenage en cours;
caractérisé par:
un circuit (L-1, L-2, L-3) d'alimentation limitée d'huile fournissant de l'huile à travers un clapet-étrangleur (61, 65, 70);
un circuit (L-4, L-5, L-6) d'alimentation rapide d'huile fournissant de l'huile sans la faire passer par ledit clapet-étrangleur (61, 65, 70);
un moyen (55, SLN) de régulation de pression servant à la régulation d'une pression de canalisation en tant que pression réglée pour fournir de l'huile sous ladite pression réglée audit circuit (L-4, L5, L-6) d'alimentation rapide d'huile; et
un moyen (51, 52, 53, 57, S1, S2, S4) de commutation de trajet d'huile servant à effectuer une commutation entre ledit circuit (L-1, L-2, L-3) d'alimentation limitée d'huile et ledit circuit (L-4, L-5, L-6) d'alimentation rapide d'huile pour fournir de l'huile audit premier servomécanisme hydraulique ou audit deuxième servomécanisme hydraulique quand on effectue ledit changement de rapport par saut vers ledit rapport d'engrenage voulu ou quand on effectue ledit changement de rapport vers ledit rapport d'engrenage intermédiaire.

2. Dispositif de commande selon la revendication 1, comprenant un moyen (37) de discrimination de cartographie de changement de rapport en fonction d'une condition de déplacement d'un véhicule,
ledit moyen (51, 52, 53, 57, S1, S2, S4) de commutation de trajet d'huile commutant ledit circuit (L-1, L-2, L-3) d'alimentation limitée et ledit circuit (L-4, L-5, L-6) d'alimentation rapide d'huile en fonction de la cartographie de changement de rapport discriminé par ledit moyen (37) de discrimination de cartographie.

3. Dispositif de commande selon la revendication 2, dans lequel ledit moyen (37) de discrimination de cartographie discrimine s'il faut exécuter ledit changement de rapport par saut vers ledit rapport d'engrenage voulu ou exécuter ledit changement de rapport vers ledit rapport d'engrenage intermédiaire.

4. Dispositif de commande selon la revendication 3, dans lequel si ledit moyen (37) de discrimination de cartographie de change ment de rapport discrimine l'exécution dudit changement de rapport par saut vers ledit rapport d'engrenage voulu, ledit moyen de commutation de trajet d'huile (51, 52, 53, 57, S1, S2, S4) effectue une commutation de manière que ladite pression réglée soit fournie par l'intermédiaire dudit circuit (L-4, L-5, L-6) d'alimentation rapide d'huile audit premier servomécanisme hydraulique.

5. Dispositif de commande selon la revendication 3, dans lequel si ledit moyen (37) de discrimination de cartographie discrimine l'exécution dudit changement de rapport vers ledit rapport d'engrenage intermédiaire, ledit moyen (51, 52, 53, 57, S1, S2, S4) de commutation de trajet d'huile effectue une commutation de manière que ladite pression réglée soit fournie par l'intermédiaire dudit circuit (L-4, L-5, L-6) d'alimentation rapide d'huile audit deuxième servomécanisme hydraulique.

6. Dispositif de commande selon la revendication 5, comprenant en outre:
un moyen (36) de discrimination d'état de changement de rapport servant à discriminer si oui ou non ledit changement de rapport vers ledit rapport d'engrenage intermédiaire est sur le point d'être achevé,
dans lequel, si ledit moyen (36) de discrimination d'état de changement de rapport discrimine que ledit changement de rapport vers ledit rapport d'engrenage intermédiaire est sur le point d'être achevé, ledit moyen (51, 52, 53, 57, S1, S2, S4) de commutation de trajet d'huile effectue une commutation de manière que la pression commandée soit fournie par l'intermédiaire du circuit (L-4, L-5, L-6) d'alimentation rapide d'huile audit premier servomécanisme hydraulique.

7. Dispositif de commande selon la revendication 6, dans lequel ledit moyen (36) de discrimination d'état de changement de rapport discrimine que ledit changement de rapport vers ledit rapport d'engrenage intermédiaire est sur le point d'être achevé si la différence (ΔN) entre une vitesse de rotation d'entrée (N_{T}) et une vitesse de rotation (Nₒ*I_{c}), qui est calculée par multiplication d'une vitesse de rotation de sortie (Nₒ) par ledit rapport d'engrenage intermédiaire (I_{c}), devient plus grande qu'une vitesse de rotation prédéterminée (Nₙₑₓₜ).

8. Dispositif de commande selon l'une quelconque des revendications 1 à 7, dans lequel ledit moyen de régulation de pression comprend une valve (55) de commande de pression servant à commander ladite pression réglée, et une électrovalve linéaire (SLN) raccordée à ladite valve de commande de pression.

9. Dispositif de commande selon l'une quelconque des revendications 1 à 8, dans lequel ledit moyen de commutation de trajet d'huile comprend une valve à tiroir (51, 52, 53) pour effectuer une commutation de manière à exécuter ledit changement de rapport par saut vers ledit rapport d'engrenage voulu ou à exécuter ledit changement de rapport vers ledit rapport d'engrenage intermédiaire, et une électrovalve (S1, S2) raccordée à ladite valve de à tiroir (51, 52, 53).

10. Dispositif de commande selon l'une quelconque des revendications 1 à 8, dans lequel ledit moyen de commutation de trajet d'huile comprend une valve de commutation (57) servant à établir ou supprimer la fourniture de ladite pression réglée audit circuit (L-1, L-2, L-3) d'alimentation rapide d'huile, et une électrovalve (S4) raccordée à ladite valve de commutation (57).
